# EUROPÄISCHE PATENTSCHRIFT

(11) **EP 2 082 828 B1**
(45) Veröffentlichungstag und Bekanntmachung des Hinweises auf die Patenterteilung: **06.04.2011**
(21) Anmeldenummer: 08019865.8
(22) Anmeldetag: 13.11.2008
(51) Int. Cl.: B23Q 1/28, B23Q 16/10, B23Q 1/00

(54) **Bearbeitungszentrum mit Klemmvorrichtung für den drehbaren Werkstücktisch**
Machining centre with clamp device for the rotary workpiece table
Centre d'usinage avec système de blocage de la table tournante

(30) Priorität: 28.01.2008 DE 102008006346
(43) Veröffentlichungstag der Anmeldung: 29.07.2009
(73) Patentinhaber: Maschinenfabrik Berthold Hermle AG, 78559 Gosheim (DE)
(72) Erfinder: Bernhard, Franz-Xaver, 78549 Spaichingen (DE); Schwörer, Tobias, Dipl-Ing (FH), 78598 Königsheim (DE)
(74) Vertreter: Hager, Thomas Johannes

(56) Entgegenhaltungen:
- EP-A- 1 254 741
- WO-A-2009/008443
- WO-A-2009/008444
- DE-C1- 19 543 612
- DE-C1- 19 960 907
- DE-U1- 20 202 998
- FR-A- 2 629 745
- GB-A- 2 139 926
- JP-A- 2006 095 668

## Beschreibung

Die Erfindung betrifft ein Bearbeitungszentrum nach dem Obertegriff von Anspruch 1.

Moderne Bearbeitungszentren für die spanende Komplettbearbeitung mit definierter Schneide (Bohren, Fräsen, Drehen), insbesondere Bearbeitungszentren für eine 5-Achs-Bearbeitung (drei lineare Vorschub- bzw. Positionierachsen und zwei rotative Vorschub- bzw. Positionierachsen) besitzen drehbare Werkstücktische, die sowohl für die Bohr- und Fräsbearbeitung als auch für die Drehbearbeitung ausgelegt sind. Der Antrieb eines solchen universal einsetzbaren Werkstücktisch muss folgende Eigenschaften aufweisen:
Für die Bohr- und Fräsbearbeitung muss der Tischantrieb für den drehenden Werkstücktisch eine sehr gute Positioniergenauigkeit (hohe geometrische und kinematische Genauigkeit) mit hohem Drehmoment bei vergleichsweise geringer Drehzahl aufweisen. Beim Fräsen und Bohren wird in der Regel die rotierende Hauptbewegung (Schnittbewegung) zum spanenden Abtragen des Materials vom Werkzeug (Werkzeugspindel) ausgeführt. Das mehrschneidige und fest in der Werkzeugspindel eingespannte Werkzeug (Bohrer, Fräser) dreht sich mit entsprechender Drehzahl und wird entlang der zu bearbeitende Fläche geführt. Das Werkstück (Werkstücktisch) führt in der Regel nur die Vorschub- und die Positionsbewegung durch. Das rotierende Werkzeug erzeugt die für das spanende Abtragen des Materials notwendige Schnittbewegung.

Für die Drehbearbeitung muss der Tischantrieb für den drehenden Werkstücktisch ein sehr hohes Drehmoment bei vergleichsweise hoher Drehzahl aufweisen. Beim Drehen wird die rotierende Hauptbewegung (Schnittbewegung) zum spanenden Abtragen des Materials vom Werkstück (Werkstücktisch) ausgeführt. Das einschneidige und fest in der Werkzeugspindel eingespannte Werkzeug (Drehmeißel) steht still und wird entlang der zu bearbeitende Fläche geführt. Das Werkzeug führt in der Regel nur die Vorschub- und die Positionsbewegung durch. In Sonderfällen kann auch das Werkstück die Vorschub- und die Positionierbewegung ausführen. Das rotierende Werkstück erzeugt die für das spanende Abtragen des Materials notwendige Schnittbewegung.

Um die Zielgrößen, hohe Positioniergenauigkeit und hohes Drehmoment bei geringer Drehzahl einerseits und hohes Drehmoment bei hoher Drehzahl andererseits mit ein und dem selben Tischantrieb erfüllen zu können, werden zunehmend sogenannte Torque-Motoren als Direktantriebe eingesetzt. Diese Torque-Motoren haben den großen Vorteil, dass keine mechanischen Übertragungsglieder (Kupplungen, Getriebe usw.) notwendig sind, um die Antriebsenergie des Motors auf den Werkstücktisch zu übertragen. Das heißt, der Torque-Motor ist direkt mit der Abtriebswelle des drehbaren Werkstücktisches verbunden, etwaige Getriebe (z. B. Schneckenradgetriebe) sind nicht mehr notwendig. Durch das Weglassen der mechanischen Übertragungsglieder wird die Dynamik des Antriebssystems erhöht (Hohe Dynamik durch geringe wirksame träge Massen).

Außerdem wird durch das Weglassen der mechanischen Übertragungsglieder das Massenträgheitsmoment der kompletten Antriebskette verringert.

Des Weiteren kann durch Einbau eines Torque-Motors der Antrieb für den drehbaren Werkstücktisch sehr kompakt gestaltet werden. Dies wirkt sich besonders bei Bearbeitungszentren mit mehreren Maschinenachsen, insbesondere bei 5-Achs-Bearbeitungszentren, sehr positiv auf die kompakte Gestaltung des gesamten Bearbeitungszentrums aus.

Aus der nicht vorveröffentlichten WO 2009/008444 ist ein drehbarer Werkstücktisch mit Torque-Motor bekannt, wobei ein kreisringförmiges Klemmstück in Richtung auf die Klemmscheibe vorgespannt und fluidbetätigt in seine Freigabestellung bringbar ist.

In der DE 202 02 998 U1 ist ein drehbarer Werkstücktisch beschrieben. Dieser Werkstücktisch ist für das Fräsen (möglicherweise auch Bohren) und Drehen von relativ schweren und sperrigen Werkstücken ausgelegt. Der drehbare Werkstücktisch besitzt einen Torque-Motor der als so genannter Innenläufer ausgeführt ist. Bei einem Innenläufer ist der drehende, mit Permanentmagneten versehene Rotor innen (am Werkstücktisch) und der feststehende, mit einer Motorwicklung versehene ringförmige Stator außen (am Gehäuse) angeordnet.

Des Weiteren besitzt der Werkstücktisch eine zentrale Drehdurchführung für das Durchleiten einer Kühlflüssigkeit an den Rotor. Beim Betrieb des Torque-Motors entstehen hohe Erwärmungen am Stator wie am Rotor. Diese Erwärmungen müssen über eine kontinuierlich zirkulierende Flüssigkeit (Kühlflüssigkeit) abgeführt werden, so dass die Wärme nicht in die Tischplatte des Werkstücktisches gelangen kann. Unter einer Drehdurchführung (hydraulischer Schleifring) versteht man ein Bauteil, das Fluide (Gase oder Flüssigkeiten) den abgedichteten Übergang zwischen einem feststehenden Bauteil (Gehäuse) und einem drehenden Bauteil (drehender Werkstücktisch) ermöglicht. Bei der dargestellten Drehdurchführung handelt sich um eine Drehdurchführung mit einer berührenden Dichtung.

Weiterhin besitzt der Werkstücktisch eine hydraulisch betätigbare Klemmeinheit, die eine drehende Klemmscheibe auf das feste Gehäuse klemmt. Diese Klemmeinheit funktioniert nach dem Prinzip: Klemmen durch Hydraulik und Lösen durch Feder. Durch diese Klemmeinheit wird eine sichere und genaue Fixierung des Werkstücktisches mit dem Werkstück auch unter großen Bearbeitungsmomenten (z. B. Fräsen oder Bohren am äußeren Umfang eines großen Werkstückes) gewährleistet. Der Torque-Motor hat in der Regel kein ausreichend großes Motorhaltemoment, um ein Halten des Werkstücktisches bei einer Schwerzerspanung durch Bohren oder Fräsen sicher zu gewährleisten.

Der in der DE 202 02 998 U1 offenbarte drehbare Werkstücktisch mit einem Torque-Motor, einer Klemmeinheit und einer Drehdurchführung hat folgende Nachteile:
Die Klemmeinheit hat keine Fail-Safe-Funktionalität. Das heißt, bei Energieausfall wird die Klemmung zwangsläufig deaktiviert (Hydraulikpumpe fördert nicht mehr und der Hydraulikdruck bricht zusammen). Dies kann bei einem Bearbeitungszentrum mit einem schwenk- und drehbaren Werkstücktisch, zum Beispiel bei einem vertikalen Bearbeitungszentrum in Gantry-Bauform mit drei linearen Bewegungsachsen in der Werkzeugspindel (Werkzeug) und zwei rotativen Bewegungsachsen im Werkstücktisch, zu einer Personen- und/oder Sachgefährdung führen. Der Werkstücktisch kann dabei um eine horizontale Achse verschwenkt werden. Dreh- und Schwenkachse stehen rechtwinklig zueinander. Bei einem Energieausfall kann sich bei so einem Bearbeitungszentrum der verschwenkte Werkstücktisch bei einem schweren unsymmetrisch aufgespannten Werkstück aufgrund der Schwerkraft unerwartet und undefiniert bewegen. Personen- und Sachschäden können in diesem Fall nicht ausgeschlossen werden.

Des Weiteren ist die Klemmeinheit relativ aufwendig aufgebaut. Besonders die vielen über den Umfang gleichmäßig verteilten Kolben-Zylinder-Einheiten sind fertigungstechnisch nur unter hohem Aufwand zu realisieren. Außerdem können die Kolben-Zylinder-Einheiten in radialer Richtung nicht 100% spielfrei eingebaut werden. Dies kann beim Klemmen zu einem sogenannten Schlupf führen, d. h. es kommt beim Klemmen bzw. Bremsen aus der Bewegung heraus zu einer gewissen Relativbewegung zwischen Kolben und drehender Klemmscheibe. Dies beeinflusst die Klemmkraft negativ. In so einer Situation liegt nur noch eine Reibfläche vor, nämlich zwischen drehender Klemmscheibe und festem Gehäuse. Dies reicht für eine Notklemmung bzw. Notbremsung aus der Bewegung heraus in der Regel nicht aus. In solchen Fällen werden vielmehr immer zwei Reibflächen benötigt, nämlich eine Reibfläche zwischen Betätigungskolben und drehender Klemmscheibe und eine weitere Reibfläche zwischen drehender Klemmscheibe und festen Gehäuse.

Die Drehdurchführung ist nur für das Durchleiten einer Kühlflüssigkeit ausgelegt. Weitere Fluide (Gase oder Flüssigkeiten) können mit der offenbarten Drehdurchführung nicht übertragen werden. Dies ist besonders nachteilig, wenn hydraulisch betätigte Werkstückspannmittel auf dem Werkstücktisch montiert werden müssen. Es ist Stand der Technik, dass Werkstücke nicht mehr ausschließlich manuell, sondern auch automatisch durch kraftbetätigte Spannmittel auf den Werkstücktisch aufgespannt werden. Des Weiteren hat sich in der Praxis herausgestellt, dass dichtende Drehdurchführung bei hohen Drehzahlen sehr schnell verschleißen. Dies tritt besonders dann auf, wenn der Werkstücktisch auch für das Drehen verwendet wird, da beim Drehen der Werkstücktisch mit sehr hohen Drehzahlen betrieben wird (Drehen <= 1.200 U/min, Fräsen/Bohren <= 60 U/min).

Ausgehend von diesem Stand der Technik liegt der vorliegenden Erfindung die Aufgabe zugrunde, das bekannte Bearbeitungszentrum unter Beibehaltung seiner Vorteile dahingehend weiter zu verbessern, dass die Klemmung auch bei Verlust der Energieversorgung sicher funktioniert (Fail-Safe-Klemmung), dass sie einfach und ohne viele Bauteile aufgebaut ist und dass sie mindestens zwei Reibflächen für die Klemmung aufweist.

Diese Aufgabe wird mit einem Bearbeitungszentrum nach Anpruch 1 gelöst.

Infolge dieser Ausgestaltung wird eine Fail-Safe-Klemmeinheit realisiert. Dadurch, dass das Klemmstück permanent in Richtung auf die Klemmscheibe vorgespannt ist, ist bei einem Energieausfall sichergestellt, dass der Werkstücktisch automatisch abgebremst und geklemmt wird. Denn sobald der das Klemmstück in seine Freigabestellung beaufschlagende Fluiddruck fehlt, wird das Klemmstück selbsttätig in Richtung auf die Klemmscheibe gedrängt und klemmt bzw. bremst diese.

Die Unteransprüche beinhalten vorteilhafte Weiterbildungen der Erfindung.

Nach einer ersten erfindungsgemäßen Weiterbildung wird die das Klemmstück beaufschlagende Vorspannung durch eine Vielzahl von über den Umfang des Werkstücktisches gleichmäßig verteilter Federn erreicht.

Alternativ kann die Vorspannung auch durch ein unter Druck stehendes Fluid erreicht werden.

Durch die Verwendung eines Ringkolbens als Betätigungselement wird erreicht, dass mit nur einem einzigen Bauteil gleichmäßig und mit großem Hebelarm gegen die Klemmscheibe geklemmt wird.

Der Ringkolbenr ist über eine Verdrehsicherung dreh- und spielfest aber axial beweglich mit dem Gehäuse verbunden. Durch die spielfreie Verdrehscherung für den Ringkolben wird erreicht, dass in jeder Betriebssituation zwei Reibflächen vorhanden sind. Diese verdoppelt die Klemmkraft gegenüber bekannten Klemmsystemen.

Die Verdrehsicherung besteht aus einer elastischen Scheibe, die einerseits am Gehäuse oder am Ringzylinder und andererseits am Ringkolben befestigt ist.

Nach einer bevorzugten Weiterbildung ist das Klemmstück und/oder das Auflager auf der der Klemmscheibe zugewandten Seite mit einem Reibbelag versehen. Zwar ist es nicht zwingend notwendig den Ringkolben und die Klemmscheibe mit einem speziellen Reibbelag zu versehen, jedoch kann durch einen Reibbelag der Reibkoeffizient erhöht werden.

Wenn nämlich ohne Reibbelag Stahl auf Stahl geklemmt wird, muss für die Dimensionierung der Klemmeinheit der Reibkoeffizient von Stahl geölt (µ = 0,1) angenommen werden, da nie ganz ausgeschlossen werden kann, dass Leckageöl in den Klemmraum der Klemmeinrichtung eindringt. Wird dagegen ein aufgeklebter oder genieteter Reibbelag verwendet, kann der Reibkoeffizient bei Stahl geölt auf µ = 0,2 bis 0,3 erhöht werden. Dies ist besonders dann von Vorteil, wenn eine sogenannte Not-Klemmung aus voller Bewegung beim Ausfall der Energieversorgung durchgeführt werden muss.

Um in allen Betriebszuständen des Bearbeitungszentrums eine sichere Zuführung des Fluids zu gewährleisten, ist es erforderlich, die verwendete Drehdurchführung auch für relativ hohe Drehzahlen auszulegen. Außerdem muss sie weitgehend verschleißfrei arbeiten und auch mehrere unterschiedliche Fluide (Kühlmittel, Hydrauliköl, Druckluft usw.) übertragen können. Dazu ist die Durchführung des Fluids vom Gehäuse zum Werkstücktisch nach einer vorteilhaften Weiterbildung als berührungslose Dichtung mit wälzgelagerter Führung ausgebildet. Die Dichtung kann als Spaltdichtung oder als Labyrinthdichtung ausgebildet sein und die Durchführung mehrerer Fluide ermöglichen.

Durch die Verwendung einer berührungslosen Dichtung für die Drehdurchführung wird die Standzeit derselben, insbesondere bei der Drehbearbeitung, erheblich verbessert. Durch mehrere Übertragungskanäle ist es möglich, unterschiedlichste Fluide für die verschiedenen Arbeitsaufgaben (Kühlmittel zum Kühlen des Torgue-Motors, Hydrauliköl zum Betätigen eines Werkstückspannmittels, Druckluft zur Freiblasen des Werkstücktisches usw.) zu übertragen.

Weitere Einzelheiten, Merkmale und Vorteile der Erfindung ergeben sich aus der nachfolgenden Beschreibung anhand der Zeichnungen. Es zeigen:
- Figur 1: eine schematische Gesamtansicht eines erfindungs- gemäßen Bearbeitungszentrums,
- Figur 2: eine Detailansicht einer ersten Ausführungsform der in dem erfindungsgemäßen Bearbeitungszentrum verwendeten Fail-Safe-Klemmeinheit,
- Figur 3: eine Detailansicht einer zweiten Ausführungsform der in dem erfindungsgemäßen Bearbeitungszentrum verwendeten Fail-Safe-Klemmeinheit, und
- Figur 4: eine Detailansicht einer in dem erfindungsgemäßen Bearbeitungszentrum verwendeten berührungslosen Drehdurchführung für Fluide.

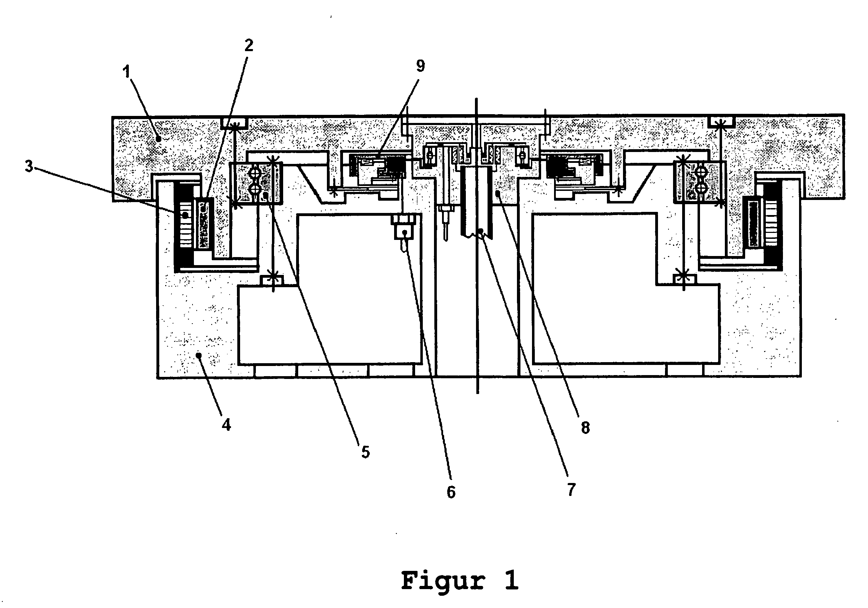

Das in Figur 1 dargestellte Bearbeitungszentrum weist einen Werkstücktisch 1 auf, der auf einem formsteifen, im Wesentlichen zylindrischen Gehäuse 4 über ein Radial-Axial-Wälzlager 5 drehbar gelagert ist.

Der in Draufsicht kreisförmige Werkstücktisch 1 ist zur genauen und verzugsfreien Einspannung von Werkstücken für die Bohr-, Fräs- und Drehbearbeitung ausgelegt.

Als Drehantrieb für den Werkstücktisch 1 dient ein leistungsstarker Torque-Motor, der in einem radial äußeren, im Gehäuse 4 ausgebildeten Ringraum angeordnet ist. Der in Form eines schmalen Ringes ausgebildete Stator 3 dieses Torque-Motors ist großflächig an der äußeren Umfangswand des Ringraums befestigt. Radial innen am Stator 3 befindet sich der ebenfalls in Form eines langgestreckten relativ schmalen Ringes ausgebildete Rotor 2.

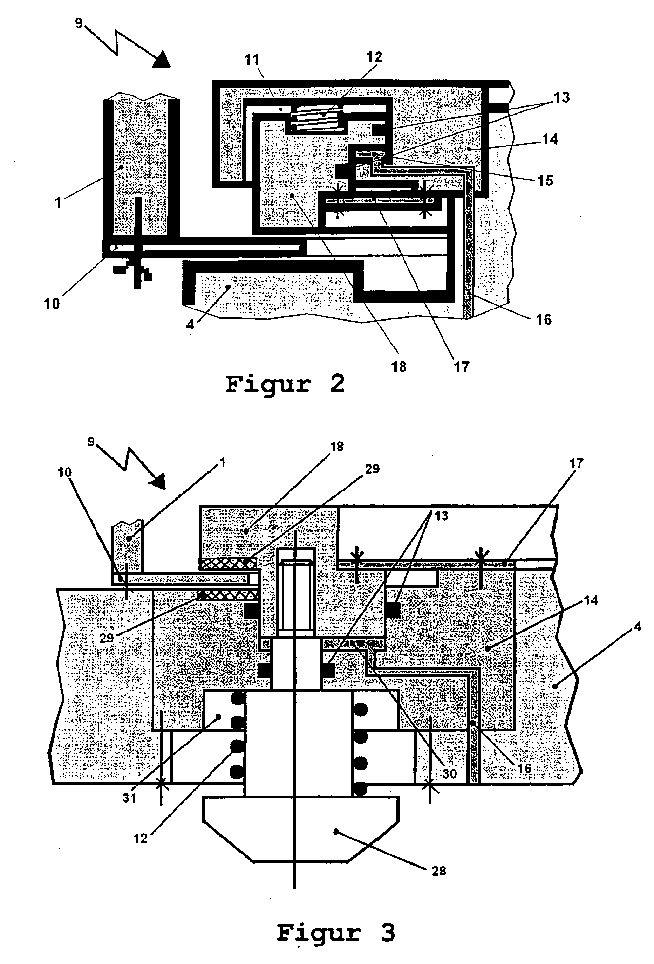

Der in Figur 1 dargestellte Werkstücktisch 1 ist mit einer Fail-Safe-Klemmeinheit 9 zum Fixieren und Abbremsen des Werkstücktisches 1 ausgestattet, die im Folgenden anhand der Figuren 2 und 3 im Einzelnen beschrieben wird.

Das Bearbeitungszentrum weist weiterhin einen hydraulischen Anschluss 6 für die Betätigung der Fail-Safe-Klemmeinheit 9 sowie einen hydraulischen Anschluss 7 für die Betätigung kraftbetriebener Werkstückspannmittel auf, die mittels einer berührungslosen Drehdurchführung 8 an eine Versorgungseinheit angeschlossen sind.

In Figur 2 ist ein erstes Ausführungsbeispiel des mit einer Fail-Safe-Klemmeinheit 9 versehenen Bearbeitungszentrums dargestellt.

Die Fail-Safe-Klemmeinheit 9 umfasst eine Klemmscheibe 10, die an einem nach unten weisenden Ringsteg des Werkstücktisches 1 befestigt ist. Die Klemmscheibe 10 besteht aus einem hochfesten und biegeelastischen Material(Hartmetall, Federstahl usw.) und hat eine konstante Dicke von einigen Millimetern.

Die Klemmscheibe 10 ist mit geringem Spiel oberhalb eines am Gehäuse 4 ausgebildeten Auflagers positioniert, das eine ebene Klemmfläche besitzt.

In einem am Gehäuse 4 befestigten Ringzylinder 14 ist ein nach unten offener Raum ausgebildet, in dem ein Ringkolben 18 derart gelagert ist, dass er in Richtung auf die Klemmscheibe 10 bewegt werden kann, um die Klemmscheibe 10 zwischen sich und dem am Gehäuse 4 ausgebildeten Auflager einzuklemmen.

Der Ringkolben 18 ist über eine als biegeelastische Scheibe ausgebildete Verdrehsicherung 17 mit dem Ringzylinder 14 derart verbunden, dass er dreh- und spielfest aber axial verschieblich an dem Ringzylinder 14 gehalten ist.

Der Ringkolben 18 ist von einer Vielzahl von über den Umfang des Werkstücktisches 1 gleichmäßig verteilter Federn 12 belastet, welche den Ringkolben 18 in Richtung auf die Klemmscheibe 10 drängen. Die Federn 12 sind in einem oberen Druckraum 11 angeordnet, welche an der der Klemmscheibe 10 abgewandten Seite des Ringkolbens 18 ausgebildet ist.

An der der Klemmscheibe 10 zugewandten Seite des Ringkolbens 18 ist ein unterer Druckraum 15 ausgebildet, der über Dichtringe 13 abgedichtet ist und mit einer Hydraulikzuleitung 16 in Verbindung steht, welche durch den Ringzylinder 15 hindurchgeführt ist.

Infolge dieser Ausgestaltung wird der Ringkolben 18 permanent durch die Federn 12 in Richtung auf die Klemmscheibe 10 belastet. Solange bei einem störungsfreien Betrieb die Energiezufuhr nicht unterbrochen ist, wird in dem unteren Druckraum 15 über eine nicht dargestellte Hydraulikpumpe ein Druck aufrechterhalten, der den Ringkolben 18 von der Klemmscheibe 10 weg gegen die Kraft der Federn 12 nach oben drückt, so dass keine Klemmkraft auf die Klemmscheibe 10 ausgeübt werden kann. Wird dagegen bei einer Betriebsstörung die Energiezufuhr unterbrochen, kann der Druck in dem unteren Druckraum 15 nicht mehr weiter aufrechterhalten werden, so dass die Federn 12 den Ringkolben nach unten gegen die Klemmscheibe 19 drücken, die dann zwischen dem Ringkolben 12 und dem am Gehäuse 4 vorgesehenen Auflager eingeklemmt wird. Somit erfolgt bei einem Ausfall der Energieversorgung eine automatisch ablaufende Notbremsung bzw. Notklemmung und der Werkstücktisch 1 wird festgesetzt.

Alternativ zu der in Figur 2 dargestellten Ausgestaltung kann anstelle der Federn 12 auch ein unter Druck stehendes Fluid in dem oberen Druckraum 11 vorgesehen sein, welches zum Aufbringen der Klemmkraft für die Klemmscheibe 10 verwendet wird. In einem solchen Fall müsste der obere Druckraum 11 ebenfalls über Dichtringe abgedichtet sein.

Bei Ausfall der Energieversorgung würde dann über ein entsprechendes Rückschlagventil der Fluiddruck für die Klemmkraft im oberen Druckraum 11 sicher eingesperrt, so dass eine sichere Klemmung auch bei Ausfall der Energieversorgung gewährleistet wäre.

In Figur 3 ist eine weitere Ausführungsform einer Fail-Safe-Klemmeinheit 9 für das erfindungsgemäße Bearbeitungszentrum dargestellt.

Bei dieser Ausführungsform wird die Klemmscheibe 10 bei einem Klemmvorgang nicht wie bei der Ausführungsform nach Figur 2 zwischen einem am Gehäuse 4 vorgesehenen Auflager und dem Ringkolben 18, sondern zwischen einem am Ringzylinder 14 vorgesehenen Auflager und dem Ringkolben 18 eingeklemmt.

Auch bei dieser Ausführungsform ist in dem Gehäuse 4 der Ringzylinder 14 angebracht, welcher den Ringkolben 18 über die Verdrehsicherung 17 lagert. Auch hier ist der Ringkolben 18 über Dichtringe 13 gegenüber dem Ringzylinder 14 abgedichtet.

Der Ringkolben 18 ist mit einer Vielzahl von über den Umfang des Werkstücktisches 1 gleichmäßig verteilt angeordneter Federbolzen 28 versehen, welche vorzugsweise in den Ringkolben 18 eingeschraubt sind. Die Federbolzen 28 sind von Federn 12 umgeben, welche sich einerseits an den Köpfen der Federbolzen 28 und andererseits in einer Ausnehmung 31 des Ringzylinders 14 abstützen und so den Ringkolben 18 in Richtung auf die Klemmscheibe 10 belasten.

Weiterhin ist zwischen dem Ringkolben 18 und dem Ringzylinder 14 ein Druckraum 30 vorgesehen, welcher mit einer Hydraulikzuleitung 16 verbunden ist.

Auch bei dieser Ausgestaltung wird der Ringkolben 18 permanent durch die Federn 12 in Richtung auf die Klemmscheibe 10 belastet. Solange bei einem störungsfreien Betrieb die Energiezufuhr nicht unterbrochen ist, wird in dem Druckraum 30 über eine nicht dargestellte Hydraulikpumpe ein Druck aufrechterhalten, der den Ringkolben 18 von der Klemmscheibe 10 weg gegen die Kraft der Federn 12 nach oben drückt, so dass keine Brems- bzw. Klemmkraft auf die Klemmscheibe 10 ausgeübt werden kann. Wird dagegen bei einer Betriebsstörung die Energiezufuhr unterbrochen, kann der Druck in dem Druckraum 30 nicht mehr weiter aufrechterhalten werden, so dass die Federn 12 den Ringkolben nach unten gegen die Klemmscheibe 10 ziehen, die dann zwischen dem Ringkolben 12 und dem am Ringzylinder 14 vorgesehenen Auflager eingeklemmt wird. Somit erfolgt auch bei dieser Ausführungsform bei einem Ausfall der Energieversorgung eine automatisch ablaufende Notbremsung bzw. Notklemmung und der Werkstücktisch 1 wird festgesetzt.

In Figur 3 ist weiterhin dargestellt, dass der Ringkolben 18 und das Auflager mit je einem Reibbelag 29 versehen sind. Alternativ kann der Reibbelag 29 auch nur am Ringkolben 18 oder nur am Auflager angeordnet sein. Die Abringung von Reibbelägen 29 ist auch bei der Ausführungsform nach Figur 2 möglich.

Wird kein Reibbelag verwendet, muss für die Dimensionierung der erfindungsgemäßen Fail-Safe-Klemmeinheit 9 von einem Reibkoeffizienten von Stahl geölt (µ = 0,1) ausgegangen werden, da letztendlich nie ganz ausgeschlossen werden kann, dass Leckageöl in den Klemmraum der Klemmeinrichtung eindringt. Wird dagegen ein Reibbelag 29 verwendet, der beispielsweise aufgeklebt oder genietet sein kann, kann der Reibkoeffizient bei Stahl geölt auf µ = 0,2 bis 0,3 erhöht werden. Dies ist besonders wichtig, wenn eine so genannte Not-Klemmung aus voller Bewegung beim Ausfall der Energieversorgung durchgeführt werden muss.

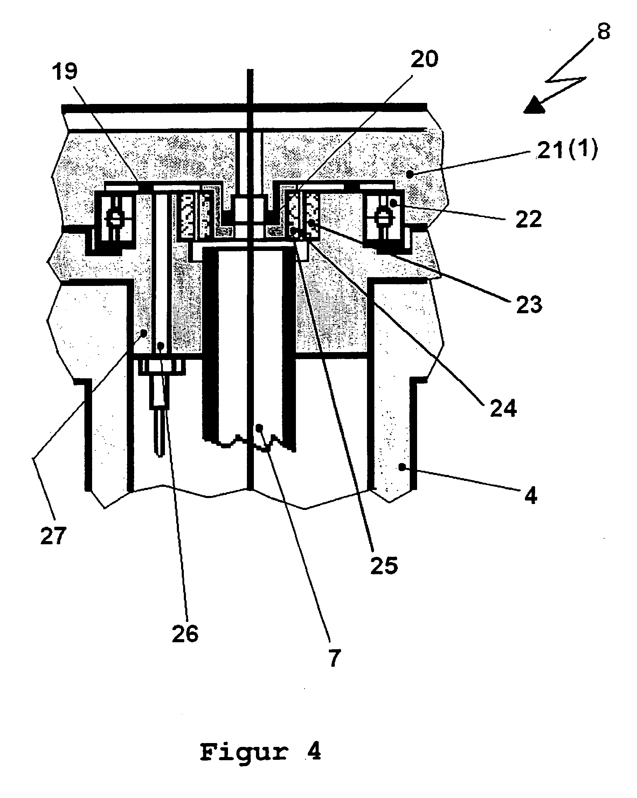

In Figur 4 ist eine Weiterbildung er Erfindung dargestellt, die sowohl im Zusammenhang mit der Ausgestaltung nach Figur 2 als auch nach der nach Figur 3 vorgesehen sein kann und die zeigt, wie die berührungslose Drehdurchführung 8 der Hydraulikzuleitungen zum Werkstücktisch 1 realisiert ist.

Auf dem Gehäuse 4 ist der Werkstücktisch 1 drehbar gelagert, der in seinem mittleren Bereich mit einem Anschlussdeckel 21 versehen ist, der einen Zugang zu der berührungslosen Drehdurchführung 8 ermöglicht. Der Anschlussdeckel 21 ist über ein Lager 22, vorzugsweise ein Wälzlager gelagert.

Das Fluid wird über den hydraulischen Anschluss 7 zugeführt, der in einem feststehenden Anschlussgehäuse 27 endet. Zwischen dem Anschlussgehäuse 27 und dem Anschlussdeckel 21 ist eine Dichtung angeordnet, welche eine Spaltringdichtung 23 am feststehenden Anschlussgehäuse 27, eine Spaltringdichtung 25 am drehbaren Anschlussdeckel 21 und einen dazwischen gebildeten Dichtspalt 24 aufweist.

Die Spaltringdichtung arbeitet wie folgt:
Bei fehlendem Fluiddruck (es wird kein Fluid durchgeleitet) berühren sich die Spaltdichtungen 23 und 25 nicht und es entsteht ein Dichtspalt 24 zwischen den beiden Spaltdichtungen 23 und 25. Beim Durchleiten eines Fluids wird durch den Fluiddruck die Spaltdichtung 25 nach außen an die Spaltdichtung 23 gedrückt und der Dichtspalt 24 wird geschlossen.

Eine absolute Dichtheit ist mit dieser berührungsfreien Anordnung allerdings nicht möglich, so dass eine gewisse Leckage funktionsbedingt immer auftritt.

Zwischen dem feststehenden Anschlussgehäuse 27 und dem drehbaren Anschlussdeckel 21 sind weiterhin noch eine statische Dichtung 20, die vorzugsweise als O-Ring ausgebildet ist, und eine dynamische Dichtung 19 zur Abdichtung für Leckagenfluid, die vorzugsweise als Radial-Wellendichtung ausgebildet ist, angeordnet. Das austretende Leckagenfluid kann über eine Leckagenleitung 26 abgeführt werden.

Statt der in Figur 3 erläuterten berührungslosen Dichtung kann auch eine so genannte berührungsfreie Labyrinthdichtung verwendet werden. Die Dichtwirkung bei einer Labyrinthdichtung beruht auf der Verlängerung des Dichtweges durch die wechselweise Anordnung von Ringen auf dem drehenden Bauteil (Anschlussdeckel 21) und dem feststehenden Bauteil (Anschlussgehäuse 27). Aufgrund des hohen Strömungswiderstandes in dem langen Spalt kann nur eine geringe, tolerierbare Fluidmenge (Leckage) durch die Labyrinthdichtung austreten.

### Bezugszeichenliste:

- 1: Werkstücktisch
- 2: Rotor
- 3: Stator
- 4: Gehäuse
- 5: Radial-Axial-Wälzlager
- 6: hydraulischer Anschluss
- 7: hydraulischer Anschluss
- 8: Berührungslose Drehdurchführung
- 9: Fail-Safe-Klemmeinheit
- 10: Klemmscheibe
- 11: oberer Druckraum
- 12: Feder
- 13: Dichtringe
- 14: Ringzylinder
- 15: unterer Druckraum
- 16: Hydraulikzuleitung
- 17: Verdrehsicherung
- 18: Ringkolben
- 19: dynamische Dichtung
- 20: statische Dichtung
- 21: Anschlussdeckel
- 22: Lager
- 23: Spaltdichtung am feststehenden Anschlussgehäuse
- 24: Dichtspalt
- 25: Spaltdichtung am drehbaren Anschlussdeckel
- 26: Leckagenleitung
- 27: Anschlussgehäuse
- 28: Federbolzen
- 29: Reibbelag
- 30: Druckraum
- 31: Ausnehmung

## Patentansprüche

1. Bearbeitungszentrum, insbes. zur Bohr-, Fräs- und Drehbearbeitung eines Werkstücks,
mit einem formsteifen Gehäuse (4),
einem auf dem Gehäuse (4) über ein Wälzlager (5) gelagerten drehbaren und über einen Torque-Motor direkt angetriebenen Werkstücktisch (1),
einer horizontalen und am Werkstücktisch (1) befestigten Klemmscheibe (10) zum Klemmen bzw. Abbremsen des Werkstücktisches (1), wobei die Klemmscheibe (10) zwischen einem Auflager und einem Klemmstück (18) einklemmbar ist,
**dadurch gekennzeichnet,**
**dass** das Klemmstück (18) in Richtung auf die Klemmscheibe (10) vorgespannt und fluidbetätigt in seine Freigabestellung bringbar ist,
**dass** das Klemmstück (18) aus einem kreisringförmigen Ringkolben (18) besteht, der über eine Verdrehsicherung (17) dreh- und spielfest aber axial beweglich mit dem Gehäuse (4) verbunden ist, und dass die Verdrehsicherung (17) aus einer elastischen Scheibe besteht, die einerseits am Gehäuse (4) oder an einem am Gehäuse befenstigten Ringzylinder (14) und andererseits am Ringkolben (18) befestigt ist.

2. Bearbeitungszentrum nach Anspruch 1, **dadurch gekennzeichnet, dass** der Ringkolben (18) unter der Wirkung einer Vielzahl über den Umfang des Werkstücktisches (1) gleichmäßig verteilter Federn (12) steht, welche die Vorspannung für den Ringkolben (18) erzeugen.

3. Bearbeitungszentrum nach Anspruch 1, **dadurch gekennzeichnet, dass** der Ringkolben (18) unter der Wirkung eines unter Druck stehenden Fluids steht, welches die Vorspannung für den Ringkolben (18) erzeugt.

4. Bearbeitungszentrum nach einem der Ansprüche 1 bis 3, **dadurch gekennzeichnet, dass** der Ringkolben (18) in einem am Gehäuse (4) befestigten Ringzylinder (14) geführt ist.

5. Bearbeitungszentrum nach einem der Ansprüche 1 bis 4, **dadurch gekennzeichnet, dass** der Ringkolben (18) und/oder das Auflager auf der der Klemmscheibe (10) zugewandten Seite mit einem Reibbelag (29) versehen ist.

6. Bearbeitungszentrum nach einem der Ansprüche 1 bis 5, **dadurch gekennzeichnet, dass** das Auflager am Gehäuse (4) ausgebildet ist.

7. Bearbeitungszentrum nach einem der Ansprüche 1 bis 6, **dadurch gekennzeichnet, dass** auf der der Klemmscheibe (10) abgewandten Seite des Ringkolbens (18) ein oberer Druckraum (11) und auf der der Klemmscheibe (10) zugewandten Seite des Ringkolbens (18) ein unterer Druckraum (15) ausgebildet ist.

8. Bearbeitungszentrum nach Anspruch 7, **dadurch gekennzeichnet, dass** in den unteren Druckraum (15) eine Hydraulikzuleitung (16) mündet, welche durch den Ringzylinder (14) hindurch geführt ist.

9. Bearbeitungszentrum nach einem der Ansprüche 7 bis 8, **dadurch gekennzeichnet, dass** die Federn (12) in dem oberen Druckraum (11) angeordnet sind und sich einerseits an dem Ringkolben (18) und andererseits an dem Ringzylinder (14) abstützen.

10. Bearbeitungszentrum nach einem der Ansprüche 1 und 3 bis 8, **dadurch gekennzeichnet, dass** das unter Druck stehenden Fluid in dem oberen Druckraum (11) angeordnet ist.

11. Bearbeitungszentrum nach Anspruch 10, **dadurch gekennzeichnet, dass** ein mit dem oberen Druckraum (11) in Verbindung stehendes Rückschlagventil vorgesehen ist, welches bei einem Energieausfall das im oberen Druckraum (11) befindliche Fluid sicher einschließt.

12. Bearbeitungszentrum nach einem der Ansprüche 1, 2 und 4 bis 6, **dadurch gekennzeichnet, dass** sich die Federn (12) einerseits an mit dem Ringkolben (18) verbundenen Federbolzen (28) und andererseits an dem Ringzylinder (14) abstützen. 2

13. Bearbeitungszentrum nach Anspruch 12, **dadurch gekennzeichnet, dass** die Federbolzen (28) in den Ringkolben (18) eingeschraubt sind.

14. Bearbeitungszentrum nach einem der Ansprüche 12 bis 13, **dadurch gekennzeichnet, dass** zwischen dem Ringkolben (18) und dem Ringzylinder (14) ein Druckraum (30) angeordnet ist, welcher mit einer Hydraulikzuleitung (16) verbunden ist, die durch den Ringzylinder (14) hindurch geführt ist.

15. Bearbeitungszentrum nach einem der Ansprüche 1 bis 5 und 12 bis 14, **dadurch gekennzeichnet, dass** das Auflager am Ringzylinder (14) ausgebildet ist.

## Claims

1. A processing centre, in particular for drilling, milling and lathing of a workpiece, comprising:
a housing (4) stiff on demoulding,
a workpiece table (1) supported rotatably on the housing (4) through a rolling bearing (5) and directly driven by a torque motor,
a horizontal clamping disc (10) fixed to the workpiece table (1) for clamping or braking the workpiece table (1), wherein the clamping disc (10) can be clamped between a support and a clamping piece (18),
**characterized in that**
the clamping piece (18) is biased toward the clamping disc (10) and can be brought into its release position by a fluid operation,
the clamping piece (18) consists of a circular ring piston (18) which is connected to the housing (4) through a locking device in a rotationally fixed and tolerance-free manner, but is axially movable, and
the locking device (17) consists of an elastic disc which is fixed on one side at the housing (4) or at a ring cylinder (14) attached to the housing and at the ring piston (18) on the other side.

2. The processing centre of claim 1, **characterized in that** the ring piston (18) is influenced by a plurality of springs (12) distributed equally about the periphery of the workpiece table (1), which generate the biasing of the ring piston (18).

3. The processing centre of claim 1, **characterized in that** the ring piston (18) is influenced by a pressurized fluid which generates the biasing of the ring piston (18).

4. The processing centre of one of claims 1 to 3, **characterized in that** the ring piston (18) is guided in a ring cylinder (14) attached at the housing (4).

5. The processing centre of one of claims 1 to 4, **characterized in that** the ring piston (18) and/or the support is/are provided with a friction lining (29) on the side facing the clamping disc (10).

6. The processing centre of one of claims 1 to 5, **characterized in that** the support is formed at the housing (4).

7. The processing centre of one of claims 1 to 6, **characterized in that** an upper pressure chamber (11) is formed on the side of the ring piston (18) facing away from the clamping disc (10) and a lower pressure chamber (15) is formed on the side of the ring piston (18) facing the clamping disc (10).

8. The processing centre of claim 7, **characterized in that** a hydraulic supply (16) opens into the lower pressure chamber (15), which is guided through the ring cylinder (14).

9. The processing centre of one of claims 7 to 8, **characterized in that** the springs (12) are arranged in the upper pressure chamber (11) and rest on the ring piston (18) on the one side and on the ring cylinder (14) on the other side.

10. The processing centre of one of claims 1 to 3 and 8, **characterized in that** the pressurized fluid is arranged in the upper pressure chamber (11).

11. The processing centre of claim 10, **characterized in that** a check valve communicating with the upper pressure chamber (11) is provided, which securely encases the fluid present in the upper pressure chamber (11) in case of an energy breakdown.

12. The processing centre of one of claims 1, 2 and 4 to 6, **characterized in that** the springs (12) rest on spring bolts (28) connected to the ring piston (18) on the one side and on the ring cylinder (14) on the other side.

13. The processing centre of claim 12, **characterized in that** the spring bolts (28) are screwed into the ring piston (18).

14. The processing centre of one of claims 12 to 13, **characterized in that** a pressure chamber (30) is arranged between the ring piston (18) and the ring cylinder (14), which is connected to a hydraulic supply (16) guided through the ring cylinder (14).

15. The processing centre of one of claims 1 to 5 and 12 to 14, **characterized in that** the support is formed at the ring cylinder (14).

## Revendications

1. Centre d'usinage, en particulier pour le forage, le fraisage et le tournage d'une pièce à usiner, comprenant
un boîtier indéformable (4),
une table porte-pièce (1) pouvant tourner, logée sur le boîtier (4) par le biais d'un palier à roulement (5) et directement entraînée par un moteur couple,
un disque de serrage (10) horizontal et fixé sur la table porte-pièce (1) pour son serrage ou freinage, le disque de serrage (10) pouvant être serré entre un appui et une pièce de serrage (18),
**caractérisé en ce que**
la pièce de serrage (18) peut être amenée dans sa position de libération par actionnement fluidique et précontrainte en direction du disque de serrage (10),
la pièce de serrage (18) se compose d'un piston annulaire en forme d'anneau de cercle (18) qui est relié au boîtier (4) par un blocage en rotation (17) de manière fixe en rotation et sans jeu mais mobile dans le sens axial, et
le blocage en rotation (17) se compose d'un disque élastique qui est fixé d'une part sur le boîtier (4) ou sur un cylindre annulaire (14) fixé sur le boîtier et d'autre part sur le piston annulaire (18).

2. Centre d'usinage selon la revendication 1, **caractérisé en ce que** le piston annulaire (18) est sous l'effet d'une pluralité de ressorts (12) répartis uniformément sur la périphérie de la table porte-pièce (1), qui génèrent la précontrainte pour le piston annulaire (18).

3. Centre d'usinage selon la revendication 1, **caractérisé en ce que** le piston annulaire (18) se trouve sous l'effet d'un fluide sous pression qui génère la précontrainte pour le piston annulaire (18).

4. Centre d'usinage selon l'une quelconque des revendications 1 à 3, **caractérisé en ce que** le piston annulaire (18) est guidé dans un cylindre annulaire (14) fixé sur le boîtier (4).

5. Centre d'usinage selon l'une quelconque des revendications 1 à 4, **caractérisé en ce que** le piston annulaire (18) et/ou l'appui est pourvu d'une garniture de friction (29) sur le côté tourné vers le disque de serrage (10).

6. Centre d'usinage selon l'une quelconque des revendications 1 à 5, **caractérisé en ce que** l'appui est réalisé sur le boîtier (4).

7. Centre d'usinage selon l'une quelconque des revendications 1 à 6, **caractérisé en ce qu'**un espace de compression supérieur (11) est réalisé sur le côté éloigné du disque de serrage (10) du piston annulaire (18) et un espace de compression inférieur (15) est réalisé sur le côté tourné vers le disque de serrage (10) du piston annulaire (18).

8. Centre d'usinage selon la revendication 7, **caractérisé en ce qu'**une conduite d'amenée hydraulique (16) qui traverse le cylindre annulaire (14) débouche dans l'espace de compression inférieur (15).

9. Centre d'usinage selon l'une quelconque des revendications 7 à 8, **caractérisé en ce que** les ressorts (12) sont disposés dans l'espace de compression (11) supérieur et s'appuient d'une part contre le piston annulaire (18) et d'autre part contre le cylindre annulaire (14).

10. Centre d'usinage selon l'une quelconque des revendications 1 et 3 à 8, **caractérisé en ce que** le fluide sous pression est disposé dans l'espace de compression supérieur (11).

11. Centre d'usinage selon la revendication 10, **caractérisé en ce qu'**un clapet antiretour se trouvant en liaison avec l'espace de compression supérieur (11) est prévu, lequel renferme de manière sûre le fluide se trouvant dans l'espace de compression supérieur (11) en cas de défaillance énergétique.

12. Centre d'usinage selon l'une quelconque des revendications 1, 2 et 4 à 6, **caractérisé en ce que** les ressorts (12) s'appuient d'une part contre des boulons à ressort (28) reliés au piston annulaire (18) et d'autre part contre le cylindre annulaire (14).

13. Centre d'usinage selon la revendication 12, **caractérisé en ce que** les boulons à ressort (28) sont vissés dans le piston annulaire (18).

14. Centre d'usinage selon l'une quelconque des revendications 12 à 13, **caractérisé en ce qu'**un espace de compression (30) relié à une conduite d'amenée hydraulique (16) qui traverse le cylindre annulaire (14), est disposé entre le piston annulaire (18) et le cylindre annulaire (14).

15. Centre d'usinage selon l'une quelconque des revendications 1 à 5 et 12 à 14, **caractérisé en ce que** l'appui est réalisé sur le cylindre annulaire (14).
